# FASCICULE DE BREVET EUROPEEN

(11) **EP 0 816 157 B1**
(45) Date de publication et mention de la délivrance du brevet: **03.11.1999**
(21) Numéro de dépôt: 97401542.2
(22) Date de dépôt: 01.07.1997
(51) Int. Cl.: B60N 2/00

(54) **Siège à configuration variable et à manipulation aiseé pour véhicule automobile**
Sitz mit veränderlicher Anordnung und erleichterter Bearbeitung für Kraftfahrzeuge
Seat with variable configuration and easy handling for automotive vehicles

(30) Priorité: 03.07.1996 FR 9608290
(43) Date de publication de la demande: 07.01.1998
(73) Titulaire: ECIA - EQUIPEMENTS ET COMPOSANTS POUR L'INDUSTRIE AUTOMOBILE, F-25400 Audincourt (FR)
(72) Inventeur: Amorim, David, 45290 Nogent sur Vernisson (FR)
(74) Mandataire: Moncheny, Michel

(56) Documents cités:
- EP-A- 0 609 130
- EP-A- 0 618 102
- FR-A- 2 699 973
- US-A- 5 238 285
- US-A- 5 282 662
- US-A- 5 393 116

## Description

La présente invention concerne un siège à configuration variable et manipulation aisée pour véhicule automobile (voir par exemple US-A-5 393 116, correspondant au préambule de la revendication indépendante).

On connaît déjà dans l'état de la technique un siège à configuration variable pour véhicule automobile, du type comprenant une armature sur laquelle sont articulés au moins deux pieds avant et arrière munis respectivement de verrous avant et arrière d'accrochage du siège sur un plancher du véhicule, et des moyens de commande de déverrouillage, d'une part, du verrou arrière lorsque le siège est dans une première configuration, et d'autre part, du verrou avant lorsque le siège est dans une seconde configuration.

FR-A-2 699 973 (N° d'enregistrement national français 92 15 857) décrit un siège de ce type pouvant être accroché de façon amovible sur le plancher de l'habitacle d'un véhicule automobile du genre monocorps.

Le siège décrit dans ce document comprend une paire de pieds avant gauche et droit et une paire de pieds arrière gauche et droit munis de verrous correspondants.

Le siège étant disposé initialement dans une configuration déployée, dite normale, adaptée pour recevoir un occupant, on sépare le siège du plancher de la façon suivante.

Tout d'abord, on rabat le dossier contre l'assise du siège, puis on déverrouille les pieds arrière à l'aide de premiers moyens de commande agencés sur le dossier. Ensuite, on fait basculer le siège autour de l'axe de pivotement matérialisé par les articulations reliant les pieds avant à l'armature, de manière à placer le siège dans une configuration repliée d'encombrement au plancher réduit. Enfin, on déverrouille les pieds avant à l'aide de second moyens de commande agencés sur ces pieds avant, puis on soulève le siège de manière à le séparer du plancher.

L'enchaînement des opérations ci-dessus est fastidieux et malaisé. En effet, l'opérateur doit notamment se baisser pour déverrouiller les pieds avant puis se relever pour soulever le siège, ce dernier étant relativement lourd.

Ledit US-A-5 393 116 décrit un siège à configuration variable pour véhicule automobile, du type précité, dans lequel les moyens de commande comprennent un organe de commande commun aux deux verrous monté déplaçable sur l'armature entre une position de repos et deux positions successives de déverrouillage décalé des verrous arrière et avant.

L'invention a pour but de faciliter les opérations permettant de séparer un siège à configuration variable du plancher du véhicule.

A cet effet, l'invention a pour objet un siège à configuration variable pour véhicule automobile, du type décrit dans US-A-5 393 116, caractérisé en ce que chaque verrou avant ou arrière comprend une aiguille déplaçable en translation entre des positions de verrouillage et de déverrouillage du verrou, et en ce que l'organe de commande est relié, d'une part, à l'aiguille du verrou arrière par un câble de commande, et d'autre part, à l'aiguille du verrou avant par une tringle de commande articulée dans une boutonnière de course morte de l'organe de commande, cette boutonnière s'étendant sensiblement parallèlement à la direction de déplacement de cet organe de commande.

Suivant d'autre caractéristiques de l'invention :
- l'organe de commande est déplaçable en translation et la boutonnière est sensiblement rectiligne;
- le pied arrière est relié à l'armature au moyen d'une articulation formant un renvoi pour le câble de commande, ce renvoi séparant des premier et second brins de câble reliés respectivement à l'organe de commande et à l'aiguille du verrou arrière;
- lorsque le siège est dans sa première configuration, la direction de déplacement de l'organe de commande est sensiblement perpendiculaire à la direction de déplacement des aiguilles des verrous avant et arrière, le premier brin de câble est sensiblement parallèle à la direction de déplacement de l'organe de commande, et le second brin de câble est sensiblement parallèle à la direction de déplacement de l'aiguille du verrou, et lorsque le siège est dans sa seconde configuration, la direction de déplacement de l'organe de commande est sensiblement parallèle à la direction de déplacement de l'aiguille du verrou avant;
- l'organe de commande est guidé en translation par trois pions solidaires de l'armature, deux premiers pions coopérant avec deux bords rectilignes délimitant l'organe de commande, et le troisième pion coopérant avec une boutonnière rectiligne de guidage ménagée dans l'organe de commande;
- le siège comprend une paire de pieds avant gauche et droit et une paire de pieds arrière gauche et droit munis de verrous correspondants, et un palonnier de commande, transversal au siège, relié aux organes de commande respectifs des pieds gauche avant et arrière et des pieds droit avant et arrière.

L'invention sera mieux comprise à l'aide de la description qui va suivre, donnée uniquement à titre d'exemple et faite en se référant aux dessins annexés, sur lesquels :
- les figures 1 et 2 sont des vues schématiques en élévation d'un siège selon l'invention dans deux configurations différentes respectivement; et
- les figures 3 et 4 sont des vues de côté à échelle agrandie, d'une partie du siège représenté aux figures 1 et 2 dans deux configurations différentes respectivement.

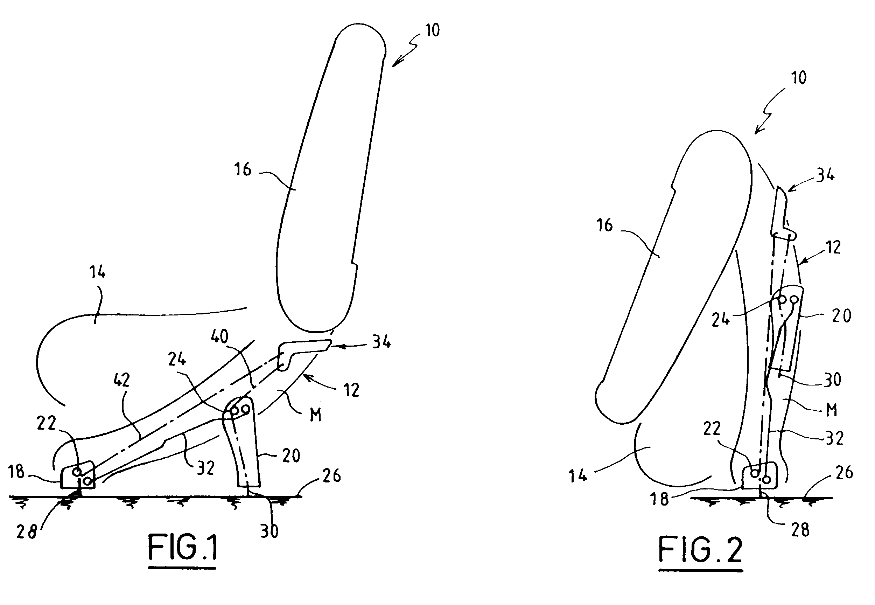

On a représenté sur les figures 1 et 2, un siège à configuration variable pour véhicule automobile, désigné par la référence générale 10. Ce siège est destiné, par exemple, à être installé dans un véhicule de type monocorps.

Dans ce qui suit, les orientations avant, arrière, gauche et droite correspondent aux orientations habituelles d'un occupant assis dans le siège 10.

Le siège 10 comporte une armature 12 munie de deux membrures latérales M en caisson, portant une assise 14, un dossier 16, une paire de pieds avant 18 gauche et droit et une paire de pieds arrière 20 gauche et droit.

Le dossier 16 est monté basculant de façon connue en soi sur les membrures M de l'armature.

Les pieds avant 18 et arrière 20 sont munis chacun d'une extrémité montée pivotante sur la membrure M correspondante de l'armature 12 au moyen d'une articulation 22,24.

Le siège 10 est accroché de façon amovible sur un plancher 26 de l'habitacle du véhicule au moyen de quatre verrous à billes classiques gauches et droits 28,30 portés par les quatre pieds 18,20 du siège.

Les verrous 28,30 sont par exemple du type décrit dans la demande de brevet français n° 2 735 174 (95 06 868) au nom de la demanderesse.

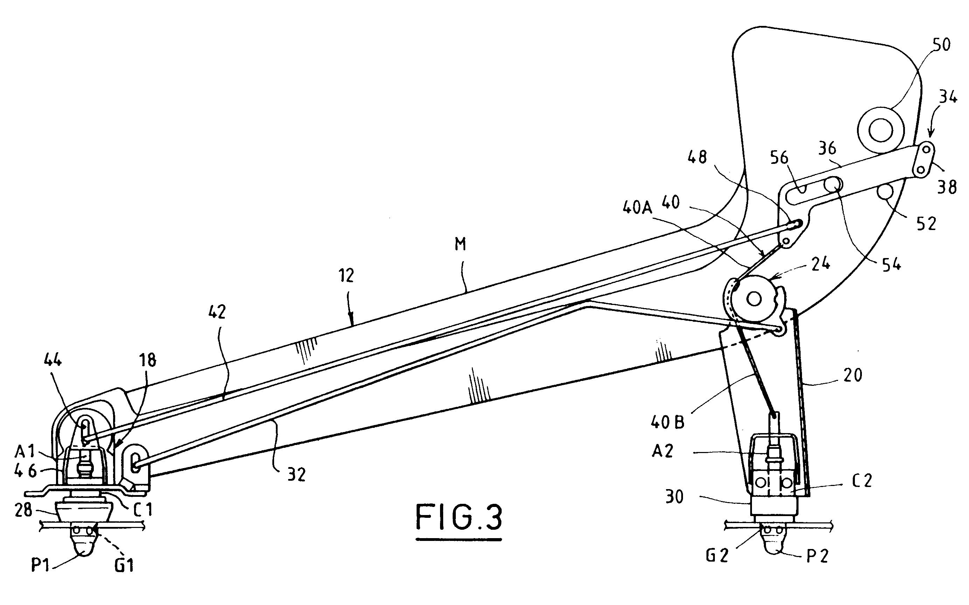

Chaque verrou 28,30 comporte un pêne P1, P2 portant les billes, destiné à être verrouillé par encliquetage dans un orifice de verrouillage formant gâche G1,G2 ménagé dans un organe solidaire du plancher 26 (voir figure 3).

Le pêne P1,P2 comprend un corps de verrouillage C1, C2 fixé sur le pied 18,20 correspondant, et une aiguille Al, A2 déplaçable en translation entre les positions de déverrouillage et de verrouillage du verrou.

L'aiguille A1, A2 est rappelée élastiquement en position de verrouillage par un ressort de compression non représenté sur les figures.

Le siège 10 peut être disposé notamment dans une configuration déployée adaptée pour recevoir un occupant et une configuration repliée d'encombrement au plancher réduit.

La configuration déployée du siège, dite "normale", est représentée à la figure 1 et permet notamment la conduite du véhicule.

Dans la configuration repliée du siège, représentée à la figure 2, les deux pieds avant 18 sont accrochés au plancher.

Pour des raisons de symétrie entre les parties droite et gauche du siège 10, on ne décrira ci-dessous que la partie gauche de ce siège illustrée sur les figures.

La position relative du pied arrière 20 par rapport à l'armature 12 est asservie de façon connue en soi à la position relative du pied avant 18 par rapport à cette armature, par exemple au moyen d'une tringle d'asservissement 32 articulée par ses extrémités avant et arrière sur chacun des pieds avant et arrière.

Les extrémités articulées des pieds 18,20 et de la tringle d'asservissement 32 définissent les sommets d'un quadrilatère articulé.

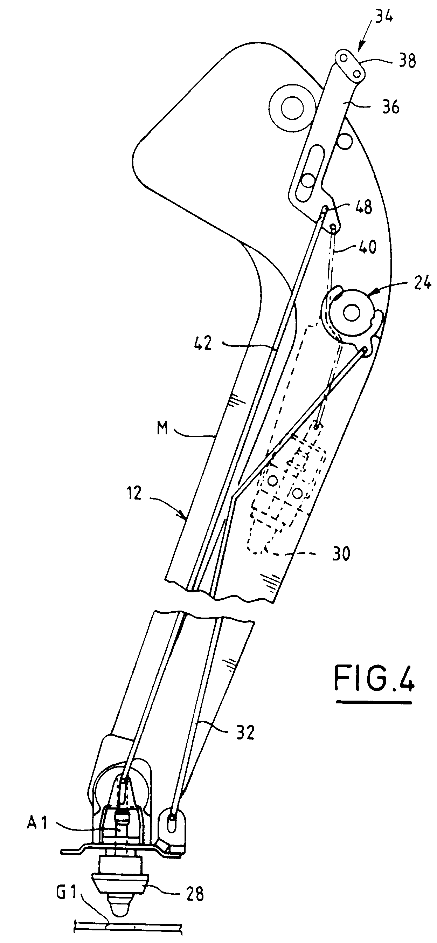

Ce quadrilatère permet, lorsqu'il est déformé, le déplacement du pied arrière 20 dans une position active saillante d'accrochage du verrou arrière 30 dans le plancher 26, telle que représentée sur les figures 1 et 3, et une position escamotée contre l'armature 12 (dans la membrure M correspondante), telle que représentée sur la figure 4.

Les verrous 28,30 des pieds arrière et avant peuvent être déverrouillés à l'aide de moyens de commande 34 qui sont représentés en détail sur les figures 3 et 4.

Les moyens de commande 34 comprennent un organe de commande 36, en forme générale de L, agencé symétriquement dans chaque partie gauche et droite du siège. Ces organes de commande 36 sont reliés entre eux par une barre, transversale au siège, formant un plafonnier de commande 38.

Pour les raisons de symétrie précisées plus haut, on ne décrira ci-dessous que les moyens de commande agencés dans la partie gauche du siège.

L'organe de commande 36 est commun aux deux verrous avant 28 et arrière 30. Il est monté déplaçable sur la membrure M correspondante de l'armature entre une position de repos, telle que représentée sur les figures 1 et 3, et deux positions successives de déverrouillage décalé des verrous arrière 30 et avant 28.

L'extrémité de l'organe de commande 36, formant la petite branche du L, est reliée, d'une part, à l'aiguille A2 du verrou arrière 30 par un câble de commande 40, et d'autre part, à l'aiguille Al du verrou avant 28 par une tringle de commande 42.

L'articulation 24 reliant le pied arrière 20 à la membrure M correspondante forme un renvoi pour le câble de commande 40. Ce renvoi sépare des premier 40A et second 40B brins du câble 40 accrochés respectivement à l'organe de commande 36 et à l'aiguille A2 du verrou arrière 30.

On notera que l'organe de commande 36 est rappelé vers sa position de repos sous l'effet de la force élastique de rappel sollicitant l'aiguille A2 du verrou arrière 30 vers sa position de verrouillage.

L'extrémité avant de la tringle de commande 42 est articulée, d'une part, sur l'aiguille Al du verrou avant, et d'autre part, dans une boutonnière 44 ménagée dans un arceau 46 solidaire du corps C1 du verrou avant 28. La boutonnière 44 s'étend sensiblement parallèlement à la direction de déplacement de l'aiguille A1 du verrou avant 28.

L'extrémité arrière de la tringle de commande 42 est articulée dans une boutonnière 48 de course morte ménagée dans l'organe de commande 36. Cette boutonnière 48, sensiblement rectiligne, s'étend sensiblement parallèlement à la direction de déplacement de l'organe de commande 36.

L'organe de commande 36 est guidé en translation par trois pions 50 à 54 solidaires de la membrure M correspondante de l'armature. Deux premiers pions 50,52 coopèrent avec deux bords rectilignes délimitant la grande branche du L de l'organe de commande 36. Le troisième pion 54 coopère avec une boutonnière rectiligne de guidage 56 ménagée dans l'organe de commande 36.

De préférence, le siège 10 comporte des moyens classiques, non représentés sur les figures, interdisant l'activation des moyens de commande 34 lorsque ce siège est dans une configuration adaptée pour recevoir un occupant, telle que la configuration "normale". Dans ce cas, l'activation des moyens de commande 34 n'est possible que lorsque le siège est dans une configuration inadaptée pour recevoir un occupant, par exemple une configuration dans laquelle le dossier 16 est rabattu contre l'assise 14.

Dans ce qui suit, deux directions sont dites sensiblement parallèles (respectivement perpendiculaires) entre elles, si leur projection sur un plan longitudinal vertical du siège sont inclinées entre elles de moins de 45° (respectivement de plus de 45°).

Le siège 10 peut être placé dans au moins deux configurations inadaptées pour recevoir un occupant, la première permettant le déverrouillage des pieds arrière 20 et la seconde permettant le déverrouillage des pieds avant 18.

Lorsque le siège est dans la première configuration, telle que représentée à la figure 3, dans laquelle les pieds 18,20 du siège sont accrochés sur le plancher, la direction de déplacement de l'organe de commande 36 est sensiblement perpendiculaire à la direction verticale de déplacement des aiguilles A1, A2 des verrous avant 28 et arrière 30, le premier brin 40A du câble de commande est sensiblement parallèle à la direction de déplacement de l'organe de commande 36, et le second brin 40B du câble de commande est sensiblement parallèle à la direction de déplacement de l'aiguille A2 et du verrou arrière 30.

Lorsque le siège est dans la seconde configuration, dite repliée, telle que représentée aux figures 2 et 4, la direction de déplacement de l'organe de commande 36 est sensiblement parallèle à la direction de déplacement de l'aiguille A1 du verrou avant 28.

On décrira ci-dessous le fonctionnement du siège 10 selon l'invention.

On considérera initialement le siège dans sa configuration "normale" adaptée pour recevoir un occupant (voir figure 1).

Dans cette configuration, le siège 10 est accroché sur le plancher 26. Les verrous 28,30 des pieds avant 18 et arrière 20 sont verrouillés dans les gâches G1,G2.

Pour séparer le siège 10 du plancher 26, l'opérateur rabat le dossier 16 contre l'assise 14 puis tire le palonnier de commande 38 vers l'arrière du siège pour placer les organes de commande 36 dans leur première position de déverrouillage des verrous arrière 30. Ainsi, les aiguilles A2 des verrous arrière 30 sont déplacées vers leur position de déverrouillage, par l'intermédiaire des câbles de commande 40 reliés aux organes de commande 36. Les pieds arrière 20 sont alors séparés du plancher.

Le déplacement initial du palonnier 38 vers l'arrière du siège est sans effet sur l'état des verrous avant 28. En effet, tant que le siège est dans la première configuration, d'une part, chaque boutonnière 48 des organes de commande 36 permet une course morte de l'extrémité arrière de la tringle de commande correspondante 42, et d'autre part, l'effort de traction transmis à chaque aiguille Al des verrous avant 28 par la tringle de commande correspondante 42, en fin de course morte dans la boutonnière 48, est sensiblement perpendiculaire à la direction de déplacement de l'aiguille A1.

Tout en gardant en main le palonnier de commande 38, l'opérateur place ensuite le siège dans sa configuration repliée, telle que représentée à la figure 2, par basculement de l'armature 12 autour de l'axe de pivotement géométrique matérialisé par les articulations 22 des pieds avant 18.

Lors de cette opération, les pieds arrière 20 se déplacent automatiquement vers leur position escamotée dans les membrures M correspondantes du fait de la déformation des quadrilatères articulés.

Lorsque le siège est dans cette configuration repliée, la direction de déplacement des organes de commande 36 est sensiblement parallèle à la direction de déplacement des aiguilles A1 des verrous avant 28. L'opérateur peut alors placer les organes de commande 36 dans leur seconde position de déverrouillage des verrous avant 28 en continuant de tirer le palonnier 38 vers le haut. Ainsi, les aiguilles A1 sont déplacées vers leur position de déverrouillage et les pieds avant 18 sont séparés du plancher 26, comme cela est représenté sur la figure 4.

La mise en place et l'accrochage du siège 10 sur le plancher 26 se font selon les opérations inverses de celles décrites précédemment.

L'invention comporte de nombreux avantages.

Les moyens de déverrouillage décalé des verrous arrière et avant sont très simples et peu coûteux.

Le palonnier commun aux organes de commande de déverrouillage des verrous permet une manipulation très aisée du siège, aussi bien lors de l'accrochage de ce siège sur le plancher que lors de la séparation de ce siège du plancher, l'opérateur n'ayant à effectuer qu'un geste simple et peu fatiguant au cours de ces opérations.

## Revendications

1. Siège à configuration variable pour véhicule automobile, du type comprenant une armature (12) sur laquelle sont articulés au moins deux pieds avant (18) et arrière (20) munis respectivement de verrous avant (28) et arrière (30) d'accrochage du siège sur un plancher (26) de véhicule automobile, et des moyens (34) de commande de déverrouillage, d'une part, du verrou arrière (30) lorsque le siège est dans une première configuration, et d'autre part, du verrou avant (28) lorsque le siège est dans une seconde configuration, les moyens de commande (34) comprenant un organe de commande (36) commun aux deux verrous (28,30) monté déplaçable sur l'armature (12) entre une position de repos et deux positions successives de déverrouillage décalé des verrous arrière (30) et avant (28), caractérisé en ce que chaque verrou avant (28) ou arrière (30) comprend une aiguille (Al, A2) déplaçable en translation entre des positions de verrouillage et de déverrouillage du verrou, et en ce que l'organe de commande (36) est relié, d'une part, à l'aiguille (A2) du verrou arrière (30) par un câble de commande (40), et d'autre part, à l'aiguille (A1) du verrou avant (28) par une tringle de commande (42) articulée dans une boutonnière (48) de course morte de l'organe de commande (36), cette boutonnière s'étendant sensiblement parallèlement à la direction de déplacement de cet organe de commande (36).

2. Siège selon la revendication 1, caractérisé en ce que l'organe de commande (36) est déplaçable en translation et la boutonnière (48) est sensiblement rectiligne.

3. Siège selon la revendication 2, caractérisé en ce que le pied arrière (20) est relié à l'armature (12) au moyen d'une articulation (24) formant un renvoi pour le câble (40) de commande, ce renvoi séparant des premier (40A) et second (40B) brins de câble reliés respectivement à l'organe de commande (36) et à l'aiguille (A2) du verrou arrière (30).

4. Siège selon la revendication 3, caractérisé en ce que, lorsqu'il est dans sa première configuration, la direction de déplacement de l'organe de commande (36) est sensiblement perpendiculaire à la direction de déplacement des aiguilles (A1,A2) des verrous avant (28) et arrière (30), le premier brin (40A) de câble est sensiblement parallèle à la direction de déplacement de l'organe de commande (36), et le second brin (40B) de câble est sensiblement parallèle à la direction de déplacement de l'aiguille (A2) du verrou (30), et en ce que, lorsqu'il est dans sa seconde configuration, la direction de déplacement de l'organe de commande (36) est sensiblement parallèle à la direction de déplacement de l'aiguille (A1) du verrou avant (28).

5. Siège selon l'une quelconque des revendications 2 à 4, caractérisé en ce que l'organe de commande (36) est guidé en translation par trois pions (50 à 54) solidaires de l'armature (12), deux premiers pions (50,52) coopérant avec deux bords rectilignes délimitant l'organe de commande (36), et le troisième pion (54) coopérant avec une boutonnière rectiligne de guidage (56) ménagée dans l'organe de commande (36).

6. Siège selon l'une quelconque des revendications précédentes, caractérisé en ce qu'il comprend une paire de pieds avant (18) gauche et droit et une paire de pieds arrière gauche et droit munis de verrous (28,30) correspondants, et un palonnier de commande (38), transversal au siège, relié aux organes de commande (36) respectifs des pieds gauche avant et arrière et des pieds droit avant et arrière.

## Claims

1. A variable configuration sent for a motor vehicle, of the type comprising a frame (12), on which are pivoted at least two front and rear feet (18 and 20), provided with front and rear catches (28 and 30) respectively for attaching the seat to a floor (26) of the motor vehicle, rind means (34) for controlling the release on the one hand of the rear catch (30) when the seat is in a first configuration and on the other hand of the front catch (28) when the sat is in a second configuration, the control means (34) comprising a control member (36) common to the two catches (28, 30), mounted movably on the frame (12) between a rest position and two successive positions for staggered release of the rear and front catches (30 and 28), characterized in that each front or rear catch (28 or 30) comprises a pin (A1, A2) movable in translation between locking and release positions of the catch, and that the control member (36) is connected on the one hand to the pin (A2) of the rear catch (30) by a control cable (40), and on the other hand to the pin (A1) of the front catch (28) by a control rod (42) pivoted in a lost motion slot (48) of the control member (36), this slot extending substantially parallel to the direction of movement of this control member (36).

2. A seat according to claim 1, characterized in that the control member (36) is movable in translation and the slot (48) is substantially rectilinear.

3. A seat according to claim 2, characterized in that the rear fool (20) is connected to the frame (12) by means of a pivot (24) forming a point of deviation of the control cable (40), this point of deviation separating first and second runs (40A and 40B) of the cable connected to the control member (36) and to the pin (A2) of the rear catch (30) respectively.

4. A seat according to claim 3, characterized in that, when it is in its first configuration, the direction of movement of the control member (36) is substantially perpendicular to the direction of displacement of the pins (A1, A2) of the front and rear catches (28 and 30), the first run (40A) of the cable is substantially parallel to the direction of displacement of the control member (36) and the second run (40B) of the cable is substantially parallel to the direction of displacement of the pin (A2) of the catch (30), and that, when it is in its second configuration, the direction of displacement of the control member (36) is substantially parallel to the direction of displacement of the pin (A1) of the front catch

5. A seat according to any of clams 2 to 4, characterized in that the control member (36) is guided in translation by three studs (50 to 54) fixed to the frame (12), two first studs (50, 52) cooperating with two rectilinear edges bounding the control member (36) and the third stud (54) cooperating with a rectilinear guide slot (56) formed in the control member (36).

6. A seat according to any of the preceding claims, characterized in that it comprises a pair of left and right front feet (18) and a pair of left and right rear feet (20) fitted with corresponding catches (28, 30), and a control yoke (38) extending across the seat, connected to the respective control members (36) tor the left front and rear feet and the right front and rear feet.

## Patentansprüche

1. Sitz mit varänderlicher Konfiguration für Kraftfahrzeug, des Types, der einen Beschlag (12), an dem wenigstens zwei vordere (18) bzw. hintere Füße (20) angelenkt sind, die mit vorderen (28) bzw. hinteren Bolzen zum Einhakan des Sitzes an einem Boden (26) des Kraftfahrzeugs versehen sind, sowie Mittel (34) zum Steuern der Entriegelung einerseits des hinteren Bolzens (30), wenn sich der Sitz in einer ersten Konfiguration befindet, und andererseits des vorderen Riegels (28), wenn sich der Sitz in einer zweiten Konfiguration befindet, enthält, wobei die Steuermittel (34) ein Steuerelement (36) enthalten, das beiden Bolzen (28, 30) gemeinsam ist und an dem Beschlag (12) zwischen einer ersten Ruhestellung und zwei aufeinanderfolgenden Stellungen zur versetzten Entriegelung der hinteren (30) und vorderen (28) Bolzen verschiebbar angebracht ist, dadurch gekennzeichnet, daß jeder vordere (28) oder hintere (30) Bolzen eine Nadel (A1, A2) enthält, die in Translationsrichtung zwischen den Verriegelungs- und Entriegelungsstellungen des Bolzens verschiebbar ist, und daß das Steuerelement (36) einerseits mit der Nadel (A2) des hinteren Bolzens (30) über ein Steuerseil (40) und andererseits mit der Nadel (A1) des vorderen Bolzens (28) über eine Steuerstange (42) verbunden ist, welche in einer länglichen Totgang-Aussparung (48) des Steuerelements (36) angelenkt ist wobei diese längliche Aussparung sich im wesentlichen parallel zur Verschiebungsrichtung dieses Steuerelements (36) erstreckt.

2. Sitz nach Anspruch 1, dadurch gekennzeichnet, daß das Steuerelement (36) in Translationsrichtung verschiebbar ist und die längliche Aussparung (48) im wesentlichen geradlinig ist.

3. Sitz nach Anspruch 2, dadurch gekennzeichnet, daß der hintere Fuß (20) mit dem Beschlag (12) über ein Gelenk (24) verbunden ist, das eine Umlenkung für das Steuerseil (40) bildet, wobei diese Umlenkung die ersten (40A) und zweiten (40B) Seilenden, die mit dem Steuerelement (36) bzw. mit der Nadel (A2) des hinteren Bolzens (30) verbunden sind, voneinander trennt.

4. Sitz nach Anspruch 3, dadurch gekennzeichnet, daß die Verschiebungsrichtung des Steuerelements (36) dann, wenn er sich in seiner ersten Konfiguration befindet, zur Verschiebungsrichtung du Nadeln (A1, A2) der vorderen (28) und hinteren (30) Bolzen im wesentlichen senkrecht ist, das erste Seilende (40A) zur Verschiebungsrichtung des Steuerelements (36) im wesentlichen parallel ist und das zweite Seilende (40B) zur Verschiebungsrichtung der Nadel (A2) des Bolzens (30) im wesentlichen parallel ist und daß die Verschiebungsrichtung des Steuerelements (36) dann, wenn er sich in seiner zweiten Konfiguration befindet, zur Verschiebungsrichtung der Nadel (A1) des vorderen Bolzens (28) im wesentlichen parallel ist.

5. Sitz nach irgendeinem der Ansprüche 2 bis 4, dadurch gekennzeichnet, daß das Steuerelement (36) in Translationsrichtung durch drei Stiftansätze (50 bis 54) geführt wird, die mit dem Beschlag (12) fest verbunden sind, wobei zwei erste Shiftansätze (50, 52) mit den beiden geradlinigen Rändern zusammenwirken, die das Steurelement (36) begrenzen, und der dritte Stiftansatz (54) mit einer geradlinigen, länglichen Führungsaussparung (56) zusammenwirkt, die in dem Steuerelement (36) ausgespart ist.

6. Sitz nach irgendeinem der vorangehenden Ansprüche, dadurch gekennzeichnet, daß er ein Paar aus einem linken und einem rechten vorderen Fuß (18) sowie ein Paar aus einem linken und einem rechten hinteren Fuß, die mit entsprechenden Bolzen (28, 30) versehen sind, sowie einen Steuerhebel (38) enthält, der quer zum Sitz verläuft und mit den entsprechenden Steuerelementen (36) der vorderen und hinteren linken Füße bzw. der vorderen und hinteren rechten Füße verbunden ist.
